# EUROPÄISCHE PATENTSCHRIFT

(11) **EP 2 672 034 B1**
(45) Veröffentlichungstag und Bekanntmachung des Hinweises auf die Patenterteilung: **15.07.2015**
(21) Anmeldenummer: 13168484.7
(22) Anmeldetag: 21.05.2013
(51) Int. Cl.: E04D 11/00, F24J 2/52, E04D 13/12, F16M 11/00, F24F 13/32

(54) **Stützfuss zur Einleitung und Verteilung von Kräften auf einen drucksensiblen Untergrund sowie Ständersystem mit einem solchen Stützfuss**
Support leg for the introduction and distribution of forces acting on a pressure-sensitive base and stand system with such a support leg
Pied de support pour le guidage et la distribution de forces sur un sous-sol sensible à la pression et système de support doté d'un tel pied de support

(30) Priorität: 04.06.2012 DE 102012209395
(43) Veröffentlichungstag der Anmeldung: 11.12.2013
(73) Patentinhaber: HILTI Aktiengesellschaft, 9494 Schaan (LI)
(72) Erfinder: Merhar, Thomas, 9494 Schaan (LI); Hermann, Fritz, 86899 Landsberg (DE); Ostermeier, Peter, 86911 Diessen (DE)
(74) Vertreter: Hilti Aktiengesellschaft Corporate Intellectual Property

(56) Entgegenhaltungen:
- EP-B1- 2 228 501
- WO-A1-2006/085294
- DE-A1- 1 659 314
- DE-A1- 3 022 142
- JP-A- 2012 002 044
- KR-A- 20100 018 915
- US-A1- 2007 272 234
- US-A1- 2008 121 273
- US-A1- 2009 188 189

## Beschreibung

Die Erfindung betrifft einen Stützfuß zur Einleitung und Verteilung von Kräften auf einen drucksensiblen Untergrund, mit einem Sockel zur Auflage auf dem Untergrund und einem mit dem Sockel verbundenen Halteelement, an dem Verbindungsteile befestigbar sind, wobei das Halteelement eine erste Aufnahme für ein Verbindungsteil und eine zweite Aufnahme für ein Verbindungsteil aufweist und die erste Aufnahme zu einer dritten Aufnahme für ein Verbindungsteil fluchtet, wobei die drei Aufnahmen T-förmig zueinander angeordnet sind, und wobei die erste und die dritte Aufnahme durch ein U-förmig gebogenes Blech gebildet sind, Weiterhin betrifft die Erfindung ein Ständersystem mit einem solchen Stützfuß.

Ständersysteme mit Stützfüßen sind zum Beispiel auf Flachdächern aufgeständerte Installationen wie Lüftungskanäle oder -aggregate, Klimaanlagen, Rohrleitungen oder Gitterrostwege. Da Flachdächer häufig druckempfindliche Dichtfolien oder Bitumenbahnen aufweisen, ist eine Verteilung der Stützlast durch geeignete Stützfüße nötig. Weitere Anwendungen von Ständersystemen mit Stützfüßen sind Gerüstbauten oder temporäre Installationen wie Zuschauertribünen, wobei hier die Lasteinleitung in eine Teer- oder Erdoberfläche bzw. Wiesengrund erfolgt.

Aus der EP 2 228 501 B1 ist ein Stützfuß bekannt, der ein Basisteil sowie ein gegenüber dem Basisteil um einige Grad in einer Achsrichtung neigungsverstellbares Gleitteil hat, an dem eine vertikal ausgerichtete Montageschiene befestigt werden kann. Zur Befestigung einer horizontal ausgerichteten Schiene ist ein auswechselbares separates Gleitteil vorgesehen.

Die DE 30 22 142 A1 offenbart Stützen für Doppelböden, bei denen ein Stützteil winkelverstellbar gegenüber einem Sockel ist. Die US 2009/0188189 A1 beschreibt Füße mit Aufnahmen für Stabilisierungsstangen. In der US 2008/0121273 A1 sind Unterkonstruktionen für Solarmodule beschrieben, wobei die Unterkonstruktionen Gelenkelemente aufweisen. Weitere Unterkonstruktionen für Solarmodule sind in der KR 2010 0018915 A beschrieben. Die US 2007/0272234 A1 offenbart Knotenelemente für Unterkonstruktionen für Reflektorspiegel, wobei die Knotenelemente Aufnahmen für Streben aufweisen. Die WO-2006/085294-A1 offenbart einen gattungsgemäßen Stützfuß.

Die Aufgabe der Erfindung besteht darin, einen Stützfuß bzw. ein Ständersystem bereitzustellen, der bzw. das sich durch eine einfache Handhabung und universelle Einsetzbarkeit auszeichnet.

Ein erfindungsgemäßer Stützfuß ist dadurch gekennzeichnet, dass die zweite Aufnahme durch von den Schenkelenden des U-förmig gebogenen Blechs abgewinkelte, sich zu einem Ring zusammensetzende Laschen gebildet ist.

Bei einem gattungsgemässen Stützfuß weist das Halteelement eine erste Aufnahme für ein Verbindungsteil und eine zweite Aufnahme für ein Verbindungsteil auf. Dadurch lassen sich zwei Verbindungsteile (z.B. Montageschienen) gleichzeitig am Stützfuß befestigen, oder es kann nur eine der Aufnahmen am Halteelement für ein einziges Verbindungsteil genutzt werden. So schafft die Erfindung einen Stützfuß, der über vielfältige Anbindungsmöglichkeiten für Verbindungsteile verfügt und daher besonders einfach an die jeweiligen Einsatzerfordernisse angepasst werden kann.

Vorzugsweise sind die erste Aufnahme und die zweite Aufnahme schräg, insbesondere senkrecht zueinander ausgerichtet. Auf diese Weise ist eine gleichzeitige Anbindung zweier sich in unterschiedliche Achsrichtungen erstreckender Verbindungsteile möglich. Auch bei Verwendung des Stützfußes mit nur einem Verbindungsteil ist diese Ausgestaltung von Vorteil, da im Gegensatz zu bekannten Stützfüßen die Anbindung von Verbindungsteilen, die unterschiedliche Ausrichtung zum Stützfuß aufweisen, mit ein und demselben Halteelement erfolgen kann.

Bei einem gattungsgemäßen Stützfuß fluchtet die erste Aufnahme zu einer dritten Aufnahme für ein Verbindungsteil, insbesondere geht sie in die dritte Aufnahme über, und die drei Aufnahmen sind T-förmig zueinander angeordnet. Somit können die Verbindungsteile von drei Seiten her mit dem Halteelement verbunden, insbesondere in dieses eingesteckt werden. Wenn die erste und die dritte Aufnahme ineinander übergehen, kann ein Verbindungsteil von der ersten und der dritten Aufnahme zugleich gehalten werden. Insbesondere kann das Verbindungsteil durch die erste und die dritte Aufnahme und damit durch das Halteelement hindurch geschoben werden.

Bevorzugt erstreckt sich die erste Aufnahme in einer Grundstellung des Halteelements im Wesentlichen parallel zu einer unterseitigen Auflagefläche des Sockels. So eignet sich bei einem Einsatz des Stützfußes in einem auf einem Flachdach angeordneten Ständersystem die erste Aufnahme zur Verbindung mit einem horizontal ausgerichteten länglichen Verbindungsteil, während eine zur ersten Aufnahme senkrecht angeordnete zweite Aufnahme dann gleichzeitig oder alternativ ein vertikal ausgerichtetes Verbindungsteil festlegen kann. Hierbei ist unter einer Grundstellung des Halteelements eine Stellung zu verstehen, in der das Halteelement gegenüber dem Sockel nicht neigungsverstellt ist, was beispielsweise wünschenswert sein kann, um eine (leichte) Neigung des Untergrunds auszugleichen.

Die erste Aufnahme und die zweite Aufnahme können einen Überlappungsbereich aufweisen, so dass die zweite Aufnahme in die erste Aufnahme übergeht und ein Verbindungsteil durch die zweite Aufnahme in die erste Aufnahme ragen kann. Im Falle, dass nur in der zweiten Aufnahme ein Verbindungsteil gehalten wird, kann dieses noch sicherer festgelegt werden.

Da es sich bei den Installationen, für die derartige Stützfüße eingesetzt werden, oft um Montageschienenkonstruktionen mit sogenannten C-Profilschienen als Verbindungsteile handelt, haben die Aufnahmen vorzugsweise einen rechteckigen, insbesondere quadratischen Querschnitt und insbesondere den gleichen Querschnitt. Der Stützfuß ist daher mit marktüblichen Bauteilen kombinierbar und somit kostengünstig und vielfältig einsetzbar. Zudem ermöglicht ein quadratischer Querschnitt die Anbindung von Montageschienen in 90° Schritten, nämlich durch Drehung der Schiene um ihre Längsachse.

Die erste Aufnahme und/oder die dritte Aufnahme kann bzw. können eine untere, vorzugsweise gemeinsame Haltewand, bevorzugt mit wenigstens einer Befestigungsausnehmung aufweisen. Zusätzlich oder alternativ können Befestigungsausnehmungen auch in anderen Haltewänden der Aufnahmen vorgesehen sein. In einer besonders bevorzugten Ausführungsform verfügt sowohl die erste als auch die dritte Aufnahme über zumindest eine Befestigungsausnehmung, insbesondere in einer gemeinsamen unteren Haltewand.

Weiterhin kann zumindest eine der ersten und der dritten Aufnahmen wenigstens eine, vorzugsweise zwei seitliche Haltewände, bevorzugt mit einer Befestigungsausnehmung, aufweisen, um das darin gehaltene Verbindungsteil sicher festzulegen.

Vorteilhaft weist das Halteelement zwei untereinander angeordnete Befestigungsausnehmungen zum Festlegen eines in der zweiten Aufnahme angeordneten Verbindungsteils auf.

Die Befestigungsausnehmung bzw. die Befestigungsausnehmungen, die vorzugsweise als Durchgangsloch ausgebildet sind, dienen der Aufnahme eines Befestigungselements, beispielsweise mit einem Bolzen und einer Flügelmutter, mit der das jeweilige Verbindungsteil in der jeweiligen Aufnahmen festgelegt wird.

Das Befestigungselement kann z.B. einen Bolzen, insbesondere eine Schraube, und eine im Bereich der Aufnahme im Inneren des Verbindungsteils angeordnete Flügelmutter umfassen.

Erfindungsgemäss sind die erste und die dritte Aufnahme U-förmig und die zweite Aufnahme ringförmig ausgebildet.

In einer besonders bevorzugten Ausführungsform gehen die Haltewände aller Aufnahmen einstückig ineinander über, sie können z.B. aus einem Blech gebogen sein.

Erfindungsgemäss sind die erste und die dritte Aufnahme durch ein U-förmig gebogenes Blech und die zweite Aufnahme durch von den Schenkelenden des U-förmig gebogenen Blechs abgewinkelte, sich zu einem Ring zusammensetzende Laschen gebildet. Dabei sind die Aufnahmen T-förmig zueinander angeordnet. Das Halteelement ist somit ein einfaches, einstückig ausgeführtes Biegeteil aus Blech, das stabil in der Konstruktion und kostengünstig in der Herstellung ist.

Da häufig der Untergrund, auf dem ein derartiger Stützfuß aufliegt, (leicht) geneigt ist, beispielsweise bei einem Flachdach, damit Wasser ablaufen kann, sind bevorzugt der Sockel und das Halteelement neigungsverstellbar miteinander verbunden, wobei ein Arretiermittel vorgesehen ist, um Sockel und Halteelement in der eingestellten Neigung fest zueinander zu positionieren. So kann die auf dem geneigten Untergrund vorgesehene Installation durch einen Winkelausgleich am Stützfuß exakt horizontal bzw. vertikal ausgerichtet werden.

Vorteilhaft weist der Sockel einen ersten Gleitabschnitt mit einem Rundloch auf, in das ein Ende des Halteelements eingreift. Dadurch ist das Halteelement gegenüber dem Sockel in zumindest zwei Raumrichtungen verschwenkbar, während bei aus dem Stand der Technik bekannten Stützfüßen, die zur Neigungsverstellung ein Langloch einsetzen, eine Winkelanpassung nur in einer Raumrichtung gegeben ist.

Vorzugsweise ist der erste Gleitabschnitt kugelkalottenförmig ausgebildet, und insbesondere ist ein zweiter, an den ersten anliegender kugelkalottenförmiger Gleitabschnitt am Halteelement vorhanden. Ein solches Kugelkalottengelenk stellt eine einfache Ausgestaltung eines in mehrere Richtungen verstellbaren, insbesondere schwenkbaren und drehbaren, Gelenks dar. Es ermöglicht auch eine Drehung des Halteelements um die Vertikale, so dass ein etwa senkrecht verlaufendes, in der zweiten Aufnahme aufgenommenes Verbindungsteil um seine Längsachse gedreht werden kann.

Beispielsweise um eine zuverlässig festelgbare neigungsverstellbare Verbindung von Sockel und Halteelement zu erreichen, kann das Halteelement einen vorzugsweise kugelkalottenförmigen Verriegelungsabschnitt haben, der den ersten Gleitabschnitt des Sockels hintergreift. Der Gleitabschnitt des Sockels kann zwischen dem Gleitabschnitt des Haltelements und einem weiteren Element, insbesondere dem Verrieglungsabschnitt, zum Festlegen der Winkellage des Halteelements einklemmbar sein.

Gemäß einem weiteren Aspekt der Erfindung ist ein Ständersystem mit wenigstens einem erfindungsgemäßen Stützfuß vorgesehen, der weiterhin wenigstens eine insbesondere C-förmige, das Verbindungsteil bildende Montageschiene aufweist, die in eine Aufnahme eingeführt und im Halteelement mittels eines Befestigungsmittels am Herausziehen gehindert ist. Derartige Befestigungsmittel umfassen, wie bereits erwähnt, insbesondere Flügelmuttern, die von der offenen Seite ins C eingeführt werden und die einwärts gebogenen Ränder der Schiene hintergreifen.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 eine perspektivische Ansicht eines erfindungsgemäßen Stützfußes;
- Figur 2 eine perspektivische Ansicht eines Halteelements des Stützfußes aus Figur 1;
- Figur 3 eine perspektivische Teilansicht einer ersten Ausführungsform eines erfindungsgemäßen Ständersystems;
- Figur 4 eine Seitenansicht des Ständersystems aus Figur 3;
- Figur 5 eine Schnittansicht des Ständersystems längs der Linie V-V in Figur 4;
- Figur 6 ein Befestigungsmittel des Ständersystems der vorhergehenden Figuren;
- Figur 7 eine perspektivische Teilansicht einer zweiten Ausführungsform eines erfindungsgemäßen Ständersystems; und
- Figur 8 eine perspektivische Teilansicht einer dritten Ausführungsform eines erfindungsgemäßen Ständersystems.

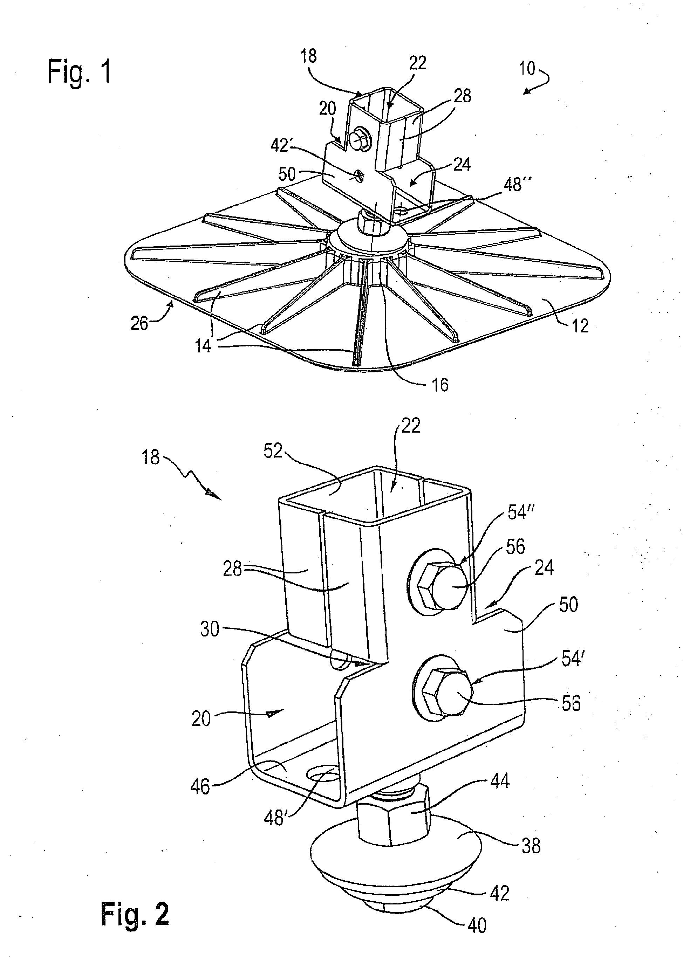

Figur 1 zeigt einen erfindungsgemäßen Stützfuß 10 zur Einleitung und Verteilung von Kräften auf einen drucksensiblen Untergrund. Der Stützfuß 10 hat einen Sockel 12 zur direkten oder indirekten Auflage auf dem Untergrund, der z.B. als Spritzgussteil aus Kunststoff oder aus Metall hergestellt ist und z.B. mehrere Versteifungsrippen 14 aufweist, die sich von einem zentralen zylindrischen Bereich 16 nach außen erstrecken.

Bei der in Figur 1 gezeigten Ausführung hat der Sockel 12 eine annähernd quadratische Form mit abgerundeten Ecken, er könnte jedoch auch eine beliebige andere Form, beispielsweise rechteckig oder rund, aufweisen.

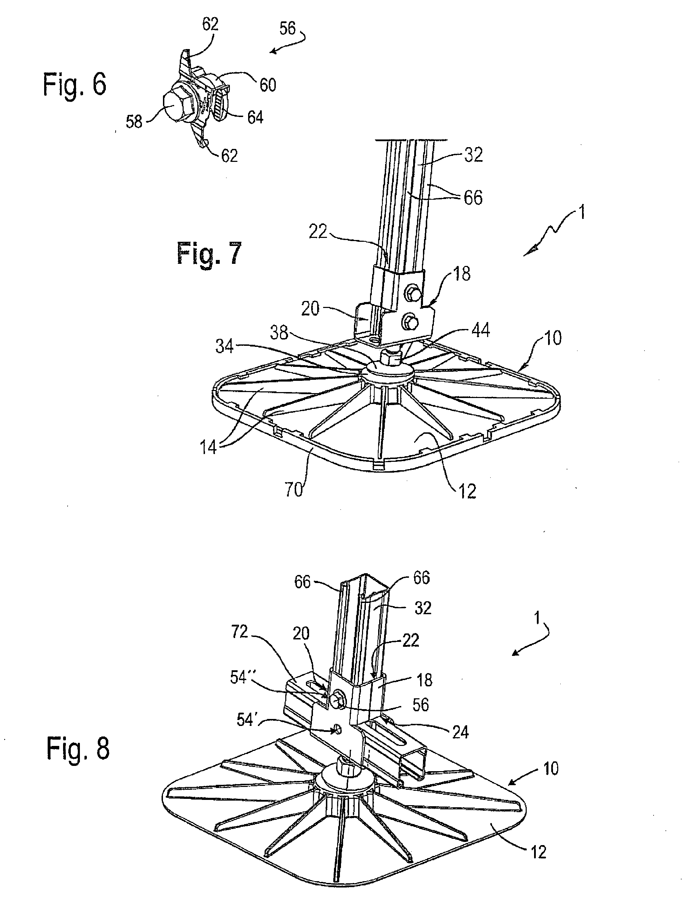

Der Stützfuß 10 umfasst weiterhin ein Halteelement 18, das in Figur 2 separat gezeigt ist und an dem mehrere Verbindungsteile, insbesondere C-förmige Montageschienen, wie sie in den Figuren 7 und 8 gezeigt sind, befestigt werden können.

Zu diesem Zweck weist das Halteelement 18 eine erste Aufnahme 20, eine zweite Aufnahme 22 und eine dritte Aufnahme 24 auf, in die jeweils eine Montageschiene eingeschoben werden kann.

Dabei sind die erste Aufnahme 20 und die zweite Aufnahme 22 senkrecht zueinander ausgerichtet, während die dritte Aufnahme 24 mit der ersten Aufnahme 20 fluchtet und in die erste Aufnahme 20 übergeht. Wie aus den Figuren ersichtlich, haben die drei Aufnahmen 20, 22, 24 somit eine T-förmige Anordnung.

In der in Figur 1 gezeigten Grundstellung des Halteelements 18 erstrecken sich die erste Aufnahme 20 und die dritte Aufnahme 24 im Wesentlichen parallel zu einer unterseitigen Auflagefläche 26 des Sockels 12, mit der der Sockel 12 bzw. der gesamte Stützfuß 10 auf dem Untergrund aufliegt.

Die erste Aufnahme 20 und die dritte Aufnahme 24 sind durch ein U-förmig gebogenes Blech gebildet, von dessen Schenkelenden Laschen 28 abgewinkelt sind, die sich zu einem, vorzugsweise geschlossenen, grundsätzlich aber auch offenen Ring mit quadratischem Querschnitt zusammensetzen und so die zweite Aufnahme 22 bilden.

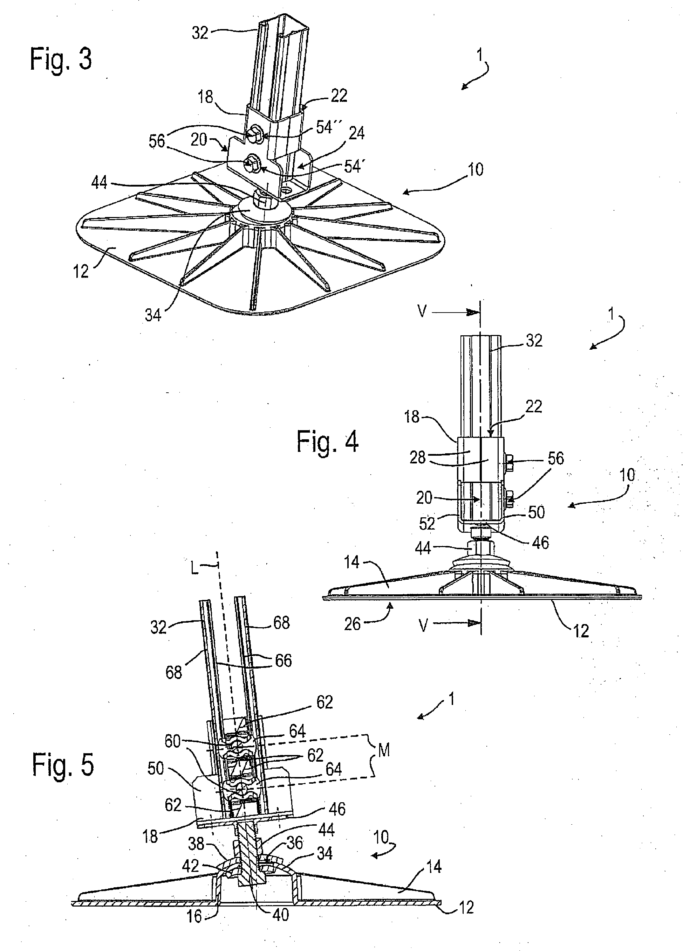

Durch die einstückige Ausführung haben die erste Aufnahme 20 und die zweite Aufnahme 22 bzw. die zweite Aufnahme 22 und die dritte Aufnahme 24 einen Überlappungsbereich 30, so dass, wie aus den Figuren 3 bis 5 ersichtlich, ein vertikal ausgerichtetes Verbindungsteil 32, hier eine C-förmige Montageschiene, durch die zweite Aufnahme 22 in die erste Aufnahme 20 und in die dritte Aufnahme 24 hineinragen kann.

Sämtliche Aufnahmen 20, 22 und 24 weisen zudem einen gemeinsamen Aufnahmequerschnitt auf, so dass ein und dasselbe Verbindungsteil 32 in jede der Aufnahmen eingeschoben werden kann.

Der Stützfuß 10 und das Verbindungsteil 32 bilden einen Teil eines Ständersystems 1, das beispielsweise zur Installation von Lüftungskanälen, Klimaanlagen oder Ähnlichem auf Flachdächern eingesetzt wird.

Um dabei eine Neigung des Untergrunds auszugleichen, sind der Sockel 12 und das Halteelement 18 neigungsverstellbar miteinander verbunden (siehe insbesondere Figur 5), und zwar über ein Kugelkalottengelenk, das durch einen kugelkalottenförmigen ersten Gleitabschnitt 34 mit einem Rundloch 36 (oder auch einem Langloch) gebildet ist, der am Sockel 12 im zentralen zylindrischen Bereich 16 vorgesehen ist.

Weiterhin umfasst das Kugelkalottengelenk einen zweiten Gleitabschnitt 38, der am Halteelement 18 angeordnet ist und zumindest teilweise auf dem ersten Gleitabschnitt 34 aufliegt. Parallel zu diesem ebenfalls kugelkalottenförmig ausgebildeten zweiten Gleitabschnitt 38 ist an einem in das Rundloch 36 hineinragenden unteren Ende 40 des Halteelements 18 ein kugelkalottenförmiger Verriegelungsabschnitt 42 vorgesehen, der den ersten Gleitabschnitt 34 des Sockels 12 hintergreift, d.h. der von unten gegen den Gleitabschnitt 34 drückt. Die kugelkalottenförmigen Abschnitte 34 und 38 sowie der kugelkalottenförmige Verriegelungsabschnitt 42 haben bevorzugt alle denselben Mittelpunkt, was einen zuverlässigen Schwenkvorgang gewährleistet.

Durch das Kugelkalottengelenk lässt sich das Halteelement 18 in jeder beliebigen Richtung innerhalb einer Ebene parallel zum Sockel 12 gegenüber diesem neigungsverstellen, wobei der maximal mögliche Verstellwinkel durch die Größe des Rundlochs 36 vorgegebenen ist.

Um den Sockel 12 und das Halteelement 18 in der einmal eingestellten Neigung fest zueinander zu positionieren, ist am Halteelement 18 ein Arretiermittel 44 in Form einer Mutter vorgesehen, das unmittelbar oberhalb des zweiten Gleitabschnitts 38 angeordnet ist und diesen derart beaufschlagt, dass eine weitere, unbeabsichtigte Verstellung des Kugelkalottengelenks nicht möglich ist, indem der Gleitabschnitt 34 zwischen den Abschnitten 38 und 42 geklemmt wird.

Wie am besten aus Figur 2 ersichtlich ist, weisen die erste Aufnahme 20 und die dritte Aufnahme 24 eine gemeinsame untere Haltewand 46 auf, die in der nicht neigungsverstellten Grundstellung des Halteelements 18 in etwa parallel zur Auflagefläche 26 des Sockels 12 verläuft.

In dieser gemeinsamen unteren Haltewand 46 befinden sich zwei Befestigungsausnehmungen 48' und 48", wobei sich eine Befestigungsausnehmung 48' im Bereich der ersten Aufnahme 20, die andere Befestigungsausnehmung 48" im Bereich der dritten Aufnahme 24 befindet.

Die erste Aufnahme 20 und die dritte Aufnahme 24 werden weiterhin durch zwei seitliche Haltewände 50 und 52 begrenzt, die zugleich gegenüberliegende seitliche Haltewände für die zweite Aufnahme 22 bilden.

Die seitliche Haltewand 50 weist dabei zwei Befestigungsausnehmungen 54' und 54" auf, in die Dreh-Befestigungsmittel 56, hier in Gestalt von Schrauben 58 mit zugehörigen Flügelmuttern 60, eingesetzt sind (siehe insbesondere Figur 6).

Die Befestigungsausnehmungen 54' und 54" sind übereinander und parallel zu einer Längsachse L des Verbindungsteils 32 angeordnet, wobei sowohl der Abstand der unteren Befestigungsausnehmung 54' von der unteren Haltewand 46 als auch der Abstand der beiden Befestigungsausnehmungen 54' und 54" voneinander so gewählt ist, dass eine möglichst einfache Vormontage gegeben ist.

Wie in Figur 6 gezeigt ist, weisen die Dreh-Befestigungsmittel 56 einen Kopfbolzen 58 und eine hieran angeordnete Flügelmutter 60 mit zwei Flügeln 64 auf, mit denen die Flügelmutter 60 die einwärts gebogenen Ränder 66 der freien Enden der Seitenschenkel 68 des U-förmigen Verbindungsteils 32 hintergreifen. Vorzugsweise können die Dreh-Befestigungsmittel 56 auch eine Druckplatte 62 aufweisen.

Figur 7 zeigt eine weitere Ausführungsform des erfindungsgemäßen Ständersystems 1, wobei hier noch eine Dämpfungs- bzw. Antirutschmatte 70 vorgesehen ist, die an der unteren Auflagefläche 26 des Sockels 12 angeordnet ist.

Figur 8 zeigt eine dritte Ausführungsform des erfindungsgemäßen Ständersystems 1. Hier ist neben dem vertikalen Verbindungsteil 32 ein zweites, sich im Wesentlichen in horizontaler Richtung erstreckendes Verbindungsteil 72 vorgesehen, das die erste Aufnahme 20 sowie die dritte Aufnahme 24 durchragt und bei dem es sich ebenfalls um eine C-Profilschiene handelt.

Anders als in der Ausführungsform mit nur einem vertikalen Verbindungsteil 32 (Figuren 3 bis 5 und 7) ist im Falle zweier Verbindungsteile 32, 72 das vertikale Verbindungsteil 32 nur über ein Dreh-Befestigungsmittel 56 in der oberen Befestigungsausnehmung 54" festgelegt. Das horizontale Verbindungsteil 72 ist über die Befestigungsausnehmungen 48' und 48" in der ersten bzw. dritten Aufnahme 20, 24 von unten am Halteelement 18 gesichert. Alternativ wäre auch eine Befestigung über nur eine der beiden Befestigungsausnehmung 48' oder 48" denkbar.

Es kann auch vorgesehen sein, in jeder der drei Aufnahmen 20, 22 und 24 eine anderes Verbindungsteil aufzunehmen. Aufgrund des Überlappungsbereichs 30 kann dabei vorzugsweise das Verbindungsteil in der zweiten Aufnahme zwischen die beiden anderen, fluchtend angeordneten Verbindungsteile der ersten und der dritten Aufnahme ragen.

Je nach Anzahl bzw. Anordnung der Verbindungsteile 32, 72 werden diese also über unterschiedliche Befestigungsausnehmungen 48', 48" 54', 54" festgelegt.

Da zudem sowohl das vertikale Verbindungsteil 32 als auch das horizontale Verbindungsteil 72 über Langlöcher in der dem Längsschlitz gegenüberliegenden unteren Wand und den Seitenwänden aufweisen können, ist eine Anbindung an den Stützfuß 10 in 90°-Schritten (Drehung um die Schienenlängsachse) möglich.

Das horizontale Verbindungsteil 72 kann aufgrund des Kalottengelenks auch stufenlos relativ zum Sockel 12 um die Vertikale verdreht werden.

Am erfindungsgemäßen Stützfuß 10 kann ohne einen Austausch des Halteelements 18 entweder ein horizontal verlaufendes Verbindungsteil 72 oder ein vertikal verlaufendes Verbindungsteil 32 oder auch gleichzeitig ein horizontal und ein vertikal verlaufendes Verbindungsteil befestigt werden. Darüber hinaus ist es natürlich möglich, zwei horizontal verlaufende Verbindungsteile 72 vorzusehen, von denen eines in der ersten Aufnahme 20 und das andere in der dritten Aufnahme 24 aufgenommen ist, mit oder ohne einem zusätzlichen vertikalen Verbindungsteil 32.

## Patentansprüche

1. Stützfuß zur Einleitung und Verteilung von Kräften auf einen drucksensiblen Untergrund, mit
einem Sockel (12) zur Auflage auf dem Untergrund und
einem mit dem Sockel (12) verbundenen Halteelement (18), an dem Verbindungsteile (32, 72) befestigbar sind,
wobei das Halteelement (18) eine erste Aufnahme (20) für ein Verbindungsteil (72) und eine zweite Aufnahme (22) für ein Verbindungsteil (32) aufweist und die erste Aufnahme (20) zu einer dritten Aufnahme (24) für ein Verbindungsteil (72) fluchtet, wobei die drei Aufnahmen (20, 22, 24) T-förmig zueinander angeordnet sind, und wobei
die erste und die dritte Aufnahme (20, 24) durch ein U-förmig gebogenes Blech gebildet sind, **dadurch gekennzeichnet,**
**dass** die zweite Aufnahme (22) durch von den Schenkelenden des U-förmig gebogenen Blechs abgewinkelte, sich zu einem Ring zusammensetzende Laschen (28) gebildet ist.

2. Stützfuß nach Anspruch 1, **dadurch gekennzeichnet, dass** die erste Aufnahme (20) und die zweite Aufnahme (22) schräg, insbesondere senkrecht zueinander ausgerichtet sind.

3. Stützfuß nach Anspruch 1 oder 2, **dadurch gekennzeichnet, dass** die erste Aufnahme (20) in die dritte Aufnahme (24) übergeht.

4. Stützfuß nach einem der vorhergehenden Ansprüche, **dadurch gekennzeichnet, dass** sich die erste Aufnahme (20) in einer Grundstellung des Halteelements (18) im Wesentlichen parallel zu einer unterseitigen Auflagefläche (26) des Sockels (12) erstreckt.

5. Stützfuß nach einem der vorhergehenden Ansprüche, **dadurch gekennzeichnet, dass** die erste Aufnahme (20) und die zweite Aufnahme (22) einen Überlappungsbereich (30) aufweisen, so dass ein Verbindungsteil (32) durch die zweite Aufnahme (22) in die erste Aufnahme (20) ragen kann.

6. Stützfuß nach einem der vorhergehenden Ansprüche, **dadurch gekennzeichnet, dass** die Aufnahmen (20, 22, 24) einen rechteckigen Querschnitt und/oder den gleichen Querschnitt aufweisen.

7. Stützfuß nach Anspruch 3, **dadurch gekennzeichnet, dass** die erste und/oder dritte Aufnahme (20, 24) eine untere, vorzugsweise gemeinsame Haltewand (46) mit wenigstens einer Befestigungsausnehmung (48', 48") aufweist.

8. Stützfuß nach einem der vorhergehenden Ansprüche, **dadurch gekennzeichnet, dass** zumindest eine der Aufnahmen (20, 22, 24) wenigstens eine, vorzugsweise zwei seitliche Haltewände (50, 52) aufweist.

9. Stützfuß nach einem der vorhergehenden Ansprüche, **dadurch gekennzeichnet, dass** das Halteelement (18) zwei untereinander angeordnete Befestigungsausnehmungen (54', 54") zum Festlegen eines in der zweiten Aufnahme (22) angeordneten Verbindungsteils (32) aufweist.

10. Stützfuß nach Anspruch 3, **dadurch gekennzeichnet, dass** die Haltewände (46, 50, 52) aller Aufnahmen (20, 22, 24) einstückig ineinander übergehen.

11. Stützfuß nach einem der vorhergehenden Ansprüche, **dadurch gekennzeichnet, dass** der Sockel (12) und das Halteelement (18) neigungsverstellbar miteinander verbunden sind, wobei ein Arretiermittel (44) vorgesehen ist, um Sockel (12) und Halteelement (18) in der eingestellten Neigung fest zueinander zu positionieren.

12. Stützfuß nach Anspruch 11, **dadurch gekennzeichnet, dass** der Sockel (12) einen ersten Gleitabschnitt (34) mit einem Rundloch (36) aufweist, in das ein Ende (40) des Halteelements (18) eingreift.

13. Stützfuß nach Anspruch 12, **dadurch gekennzeichnet, dass** der erste Gleitabschnitt (34) kugelkalottenförmig ausgebildet ist, insbesondere dass ein zweiter, an den ersten anliegender kugelkalottenförmiger Gleitabschnitt (38) am Haltelement (18) vorhanden ist.

14. Stützfuß nach Anspruch 12 oder 13, **dadurch gekennzeichnet, dass** das Halteelement (18) einen vorzugsweise kugelkalottenförmigen Verriegelungsabschnitt (42) hat, der den ersten Gleitabschnitt (34) des Sockels (12) hintergreift.

15. Ständersystem mit wenigstens einem Stützfuß (10) nach einem der vorhergehenden Ansprüche und wenigstens einer, insbesondere C-förmigen, ein Verbindungsteil (32) bildenden Montageschiene, die in eine Aufnahme (20, 22, 24) eingeführt und im Haltelement (18) mittels eines Befestigungsmittels (56) am Herausziehen gehindert ist.

## Claims

1. Support foot for transmitting and distributing forces to a pressure-sensitive substrate, comprising
a base (12) for resting on the substrate, and
a retaining element (18) which is connected to the base (12) and to which connecting parts (32, 72) can be fastened,
wherein the retaining element (18) has a first receptacle (20) for a connecting part (72) and a second receptacle (22) for a connecting part (32) and the first receptacle (20) is flush with a third receptacle (24) for a connecting part (72), the three receptacles (20, 22, 24) forming a T-shape with one another, and wherein the first and third receptacles (20, 24) are formed by sheet metal bent to form a U-shape,
**characterised in that**
the second receptacle (22) is formed by lateral end plates (28) of the U-shaped sheet metal which are bent together to form a ring.

2. Support foot according to Claim 1, **characterised in that** the first receptacle (20) and the second receptacle (22) are oriented at an angle, in particular perpendicularly, to one another.

3. Support foot according to Claim 1 or 2, **characterised in that** the first receptacle (20) is continuous with the third receptacle (24).

4. Support foot according to any one of the preceding claims, **characterised in that**, in a basic position of the retaining element (18), the first receptacle (20) extends substantially parallel to a contact surface (26) on the underside of the base (12).

5. Support foot according to any one of the preceding claims, **characterised in that** the first receptacle (20) and the second receptacle (22) have an overlap region (30) such that a connecting part (32) can project through the second receptacle (22) into the first receptacle (20).

6. Support foot according to any one of the preceding claims, **characterised in that** the receptacles (20, 22, 24) have a rectangular cross section and/or the same cross section.

7. Support foot according to Claim 3, **characterised in that** the first and/or third receptacle (20, 24) has/have a lower, preferably common, retaining wall (46) with at least one fastening aperture (48', 48").

8. Support foot according to any one of the preceding claims, **characterised in that** at least one of the receptacles (20, 22, 24) has at least one, preferably two, lateral retaining walls (50, 52).

9. Support foot according to any one of the preceding claims, **characterised in that** the retaining element (18) has two fastening apertures (54', 54") arranged one below the other for fastening a connecting part (32) arranged in the second receptacle (22).

10. Support foot according to Claim 3, **characterised in that** the retaining walls (46, 50, 52) of all the receptacles (20, 22, 24) are integral with one another.

11. Support foot according to any one of the preceding claims, **characterised in that** the base (12) and the retaining element (18) are connected to one another in an inclination-adjustable manner, a locking means (44) being provided in order to fix base (12) and retaining element (18) with respect to one another in the set inclined position.

12. Support foot according to Claim 11, **characterised in that** the base (12) has a first sliding section (34) with a round hole (36) in which an end (40) of the retaining element (18) engages.

13. Support foot according to Claim 12, **characterised in that** the first sliding section (34) is configured as a spherical cap, in particular **in that** a second sliding section (38), configured as a spherical cap and fitting closely on the first, is present on the retaining element (18).

14. Support foot according to Claim 12 or 13, **characterised in that** the retaining element (18) has a locking section (42), preferably configured as a spherical cap, which engages behind the first sliding section (34) of the base (12).

15. Pedestal system with at least one support foot (10) according to any one of the preceding claims and with at least one, in particular C-shaped, mounting rail forming a connecting part (32), which is inserted into a receptacle (20, 22, 24) and, when in the retaining element (18), is prevented from being pulled out by means of a fastening means (56).

## Revendications

1. Pied d'appui destiné à appliquer et répartir des forces sur un substrat sensible à la pression, comportant :
une plaque d'assise (12) destinée à reposer sur le substrat et
un élément de support (18) relié à la plaque d'assise (12), sur lequel peuvent être fixées des pièces de liaison (32, 72),
dans lequel l'élément de support (18) comporte un premier logement (20) pour une pièce de liaison (72) et un deuxième logement (22) pour une pièce de liaison (32) et le premier logement (20) affleure un troisième logement (24) pour une pièce de liaison (72), dans lequel les trois logements (20, 22, 24) sont agencés les uns par rapport aux autres de manière à être en forme de T, et dans lequel
les premier et troisième logements (20, 24) sont formés par une tôle pliée en forme de U,
**caractérisé en ce que** le deuxième logement (22) est formé par des rabats (28) se combinant pour former une bague et déviant à partir des extrémités d'aile de la tôle pliée en forme de U.

2. Pied d'appui selon la revendication 1, **caractérisé en ce que** le premier logement (20) et le deuxième logement (22) sont orientés de biais, en particulier perpendiculairement, l'un par rapport à l'autre.

3. Pied d'appui selon la revendication 1 ou 2, **caractérisé en ce que** le premier logement (20) se prolonge dans le troisième logement (24).

4. Pied d'appui selon l'une des revendications précédentes, **caractérisé en ce que** dans une position de base de l'élément de support (18), le premier logement (20) s'étend de manière sensiblement parallèle à une surface d'appui inférieure (26) de la plaque d'assise (12).

5. Pied d'appui selon l'une des revendications précédentes, **caractérisé en ce que** le premier logement (20) et le deuxième logement (22) ont une zone de chevauchement (30), de telle sorte qu'une pièce de liaison (32) peut faire saillie dans le premier logement (20) à travers le deuxième logement (22).

6. Pied d'appui selon l'une des revendications précédentes, **caractérisé en ce que** les logements (20, 22, 24) ont une section transversale rectangulaire et/ou la même section transversale.

7. Pied d'appui selon la revendication 3, **caractérisé en ce que** le premier et/ou troisième logement (20, 24) comporte une paroi inférieure de retenue (46), de préférence commune avec au moins un évidement de fixation (48', 48").

8. Pied d'appui selon l'une des revendications précédentes, **caractérisé en ce qu'**au moins un des logements (20, 22, 24) comporte au moins une, de préférence deux, parois latérales de retenue (50, 52).

9. Pied d'appui selon l'une des revendications précédentes, **caractérisé en ce que** l'élément de support (18) comporte deux évidements de fixation (54', 54") agencés l'un au-dessous de l'autre pour bloquer une pièce de liaison (32) agencée dans le deuxième logement (22).

10. Pied d'appui selon la revendication 3, **caractérisé en ce que** les parois de retenue (46, 50, 52) de tous les logements (20, 22, 24) se prolongent les unes dans les autres pour former un seul tenant.

11. Pied d'appui selon l'une des revendications précédentes, **caractérisé en ce que** la plaque d'assise (12) et l'élément de support (18) sont reliés l'un à l'autre de manière telle que leur inclinaison peut être réglée, dans lequel des moyens d'arrêt (44) sont prévus afin de positionner fermement la plaque d'assise (12) et l'élément de support (18) l'un par rapport à l'autre à l'inclinaison réglée.

12. Pied d'appui selon la revendication 11, **caractérisé en ce que** la plaque d'assise (12) comporte une première partie de glissement (34) avec un trou rond (36), dans lequel s'engage une extrémité (40) de l'élément de support (18).

13. Pied d'appui selon la revendication 12, **caractérisé en ce que** la première partie de glissement (34) est configurée en forme de calotte sphérique, en particulier **en ce qu'**une seconde partie de glissement (38) en forme de calotte sphérique et en contact avec la première partie de glissement, est présente sur l'élément de support (18).

14. Pied d'appui selon la revendication 12 ou 13, **caractérisé en ce que** l'élément de support (18) a une partie de verrouillage (42) de préférence en forme de calotte sphérique, qui s'engage derrière la première partie de glissement (34) de la plaque d'assise (12).

15. Système de support comportant au moins un pied d'appui (10) selon l'une des revendications précédentes et au moins un rail de montage, en particulier en forme de C, formant une pièce de liaison (32), qui est inséré dans un logement (20, 22, 24) et qui est empêché d'être extrait de l'élément de support (18) par des moyens de fixation (56).
